Europäisches Patentamt

European Patent Office

Office européen des brevets

(19)

(11) **EP 1 328 399 B1**

(12) **EUROPÄISCHE PATENTSCHRIFT**

(45) Veröffentlichungstag und Bekanntmachung des Hinweises auf die Patenterteilung:
**15.06.2005 Patentblatt 2005/24**

(51) Int Cl.⁷: **B32B 27/06**, C08J 7/06, C08J 7/04, C09C 1/30, C09C 1/40, B65D 65/40

(21) Anmeldenummer: **01982425.9**

(22) Anmeldetag: **12.10.2001**

(86) Internationale Anmeldenummer:
**PCT/EP2001/011802**

(87) Internationale Veröffentlichungsnummer:
**WO 2002/034510 (02.05.2002 Gazette 2002/18)**

(54) **STERILGUT-VERPACKUNGSMATERIAL**

PACKAGING MATERIAL FOR STERILE ITEMS

MATERIAU D'EMBALLAGE DE PRODUITS STERILES

(84) Benannte Vertragsstaaten:
**AT CH DE ES FR GB IT LI NL SE**

(30) Priorität: **20.10.2000 EP 00810976**

(43) Veröffentlichungstag der Anmeldung:
**23.07.2003 Patentblatt 2003/30**

(73) Patentinhaber: **Alcan Technology & Management AG**
**8212 Neuhausen am Rheinfall (CH)**

(72) Erfinder: **HOFFMANN, Manfred**
**78467 Konstanz (DE)**

(56) Entgegenhaltungen:
EP-A- 0 760 283      EP-A- 0 792 846
EP-A- 0 960 901      US-A- 5 645 923

• **PATENT ABSTRACTS OF JAPAN vol. 2000, no. 02, 29. Februar 2000 (2000-02-29) & JP 11 300876 A (TOPPAN PRINTING CO LTD), 2. November 1999 (1999-11-02)**
• **PATENT ABSTRACTS OF JAPAN vol. 2000, no. 10, 17. November 2000 (2000-11-17) & JP 2000 202940 A (TOPPAN PRINTING CO LTD), 25. Juli 2000 (2000-07-25)**

EP 1 328 399 B1

**Beschreibung**

Vorliegende Erfindung betrifft die Verwendung eines flexiblen Verpackungsmaterials zur Herstellung von Sterilgut-Packungen sowie ein Verfahren zu dessen Herstellung.

Flexible Sterilgut-Verpackungsmaterialien, d.h. flexible sterilisierbare Verpackungsmaterialien, werden auf dem Gebiet der Nahrungsmittelverpackungen zum keimfreien Verpacken von Nahrungsmittel für Mensch und Tier eingesetzt. Die genannten Verpackungsmaterialien kommen insbesondere als Beutelverpackungen in verschiedensten Ausführungen zum Einsatz.

Flexible Sterilgut-Verpackungsmaterialien zeichnen sich durch ihre Sterilisierbarkeit aus. Das heisst, sie müssen im Vergleich zu gewöhnlichen flexiblen Verpackungsmaterialien den hohen Beanspruchungen, welche von den Sterilistationsvorgängen ausgehen, standhalten. Die Verpackungsmaterialen sollten dabei ihre vorteilhaften Eigenschaften, wie z.B. Gasdichtigkeit, möglichst beibehalten und nicht beschädigt werden.

Die Verpackungsmaterialien werden während der Sterilisation über eine gewisse Zeit, d.h. z.B. während einigen Minuten, auf Temperaturen von über 100°C erhitzt und dadurch hohen thermischen Belastungen ausgesetzt. Damit eine vollständige Tötung aller Keime und Erreger stattfindet, wird das Verpackungsgut, insbesondere fleischhaltiges Verpackungsgut, in der Regel bei sehr hohen Temperaturen von z.B. 130°C bis 140°C sterilisiert. Unter solch extremen Sterilisationsbedingungen steigen die Anforderungen an die Verpackungsmaterialien jedoch enorm an.

Aus diesen Gründen können nur wenige flexible Verpackungsmaterialien als Sterilgut-Verpackungsmaterialien eingesetzt werden.

Flexible Sterilgut-Verpackungsmaterialen enthalten in der Regel aus Gründen der Ästhetik, der Wirtschaftlichkeit und Ökologie mehrheitlich Folien und/oder Schichten aus Kunststoff, wobei auf den Einsatz von Metallfolien soweit möglich verzichtet wird.

Flexible Sterilgut-Verpackungsmaterialien müssen häufig auch Sperreigenschaften gegenüber Gasen, z.B. Sauerstoff oder Kohlendioxid, oder Wasserdampf oder aromatischen Stoffen aufweisen. Da die Kunststofffolien oder -schichten der Verpackungsmaterialien meist ungenügende Sperrwirkung aufweisen, enthalten die Verpackungsmaterialien weitere Folien oder Schichten mit besonderen Barriereeigenschaften.

In der Verpackungstechnik werden gegenwärtig als Barrierematerialien z.B. Metalle, wie Aluminium, Polymere (EVOH oder PVDC), mit dünnen metallischen oder keramischen Schichten bedampfte Polymere oder entsprechende Materialkombinationen eingesetzt.

Die DE 196 50 286 beschreibt Folien bzw. Folienverbunde mit einer Trägerfolie aus einem Kunststoff und darauf angeordnet eine oxidische Dünnschicht als Barriereschicht und auf der oxidischen Dünnschicht eine weitere Schicht aus einem anorganisch-organischen Hybridpolymer, einem sogenannten ORMOCER®, mit einer Schichtdicke von 1 - 15 µm. Die Anordnung einer solchen ORMOCER®-Schicht auf die oxidische Dünnschicht soll die Barrierewirkung des Folienverbundes erhöhen.

Ferner beschreibt auch die US 5,645,923 Folien bzw. Folienverbunde mit einer Trägerfolie aus einem Kunststoff und darauf angeordnet eine oxidische Dünnschicht als Barriereschicht. Auf der oxidischen Dünnschicht ist eine weitere Schicht aus einem nach dem Sol-Gel-Verfahren hergestellten Sol-Gel-Lack angeordnet. Die Anordnung dieses Sol-Gel-Lackes auf der oxidischen Dünnschicht soll die Barrierewirkung des Folienverbundes erhöhen.

Nicht alle der aufgezählten Barrierematerialien eignen sich jedoch zum Einsatz in Sterilgut-Verpackungsmaterialien und gewisse Barrierematerialien, wie z.B. die genannten ORMOCER®e oder allgemein Sol-Gel-Lacke sind überdies in den vorgeschlagenen anzuwendenden Mengen sehr teuer.

Es sind z.B. sterilisierbare Folienverbunde bekannt, welche aus einem Verbund aus Kunststofffolien oder Kunststofflaminaten und einer wasserdampf- und gasundurchlässigen Sperrschicht in Form einer Metallfolie bestehen. Metallfolien oder Metallbeschichtungen eignen sich ausgezeichnet für Sterilgut-Verpackungsmaterialien und weisen überdies ausgezeichnete Sperreigenschaften aus. Aus ökologischen Gründen und hinsichtlich dem zunehmenden Bedürfnis nach sortenreinen Verpackungen sind Metallanteile in Kunststoffverpackungen nicht erwünscht. Im weiteren gestaltet sich die Qualitätssicherung des Verpackungsgutes, wie z.B. das Detektieren von möglichen Metallteilen im Verpackungsgut, bei metallfreien Verpackungsmaterialien wesentlich einfacher. Ferner werden heute zunehmend transparente Verpackungsfolien verlangt, welche durch Einsatz metallischer Sperrschichten nicht zu erreichen sind. Im weiteren sollen Nahrungsmittel in Sterilgut-Verpackungen auch in Mikrowellengeräten zubereitet werden können, was metallfreie Sterilgut-Verpackungsmaterialien voraussetzt.

Es sind auch sterilisierbare Folienverbunde bekannt, welche oxidbeschichtete Kunststofffolien enthalten, wobei die vergleichsweise dünne oxidische Schicht auf der Kunststofffolie die Funktion der Barriereschicht übernimmt.

Die thermische Beanspruchung des Sterilgut-Verpackungsmaterials während der Sterilisation führt jedoch in der Regel zu einer Verschlechterung dessen Sperreigenschaften. Besonders unter extremen Sterilisationsbedingungen kann eine massive, irreversible Beeinträchtigung der Sperreigenschaften auftreten. So kann z.B. die Zunahme der Sauerstoffdurchlässigkeit einer herkömmlichen sterilisierbaren Verpackungsfolie unter extremen Sterilisationsbedingungen um einen Faktor 3 bis 20 betragen.

Aufgabe vorliegender Erfindung ist es deshalb, ein flexibles Sterilgut-Verpackungsmaterial aus einer Folie oder einem Folienvebund mit Barriereeigenschaften gegenüber Gasen, Wasserdampf und Aromastoffen vorzuschlagen, welche insbesondere auch unter extremen Sterilisationsbedingungen dauerhaft erhalten bleiben. Das als Massenware konzipierte flexible Sterilgut-Verpackungsmaterial soll zudem wirtschaftlich in seiner Herstellung sein. Ferner soll das flexible Sterilgut-Verpackungsmaterial möglichst sortcnrein sein und bei Bedarf in transpartenter Ausführung hergestellt werden können.

Dieses Ziel wird durch das gemäß Anspruch 1 zu verwendende Verpackungsmaterial erreicht.

Die anorganisch-organischen Hybridpolymere liegen zweckmässig als Lacksysteme vor. Anorganisch-organische Hybridpolymere werden auch als ORMOCER®e bezeichnet.

Es hat sich überraschend gezeigt, dass durch den erfindungsgemässen Einsatz einer vergleichsweise sehr dünnen funktionellen Schicht eines anorganisch-organischen Hybridpolymers in der beanspruchten Stcrilgut-Verpakkungsfolie, die durch die Sterilisation verursachte, irreversible Abnahme der Sperrwirkung gegenüber Gasen wie Kohlendioxid und insbesondere Sauerstoff, sowie Wasserdampf erheblich vermindert werden kann. Insbesondere bei einer Erhöhung der Sterilisationstemperatur von z.B. 120°C auf 135°C findet dank der funktionellen Schicht eines anorganisch-organischen Hybridpolymers praktisch keine oder nur eine geringfügige Abnahme der Barrierewirkung statt. Da die Schichtabfolge mit einer keramischen Dünnschicht und einer funktionellen Schicht eines anorganisch-organischen Hybridpolymers selbst bessere Barriereeigenschaften aufweist, als die keramische Dünnschicht alleine, wird gleichzeitig auch eine zusätzliche Steigerung der Sperrwirkung unabhängig von den Sterilisationsbedingungen erzielt, so dass das erfindungsgemässe Sterilgut-Verpackungsmaterial auch unter extremen Sterilisationsbedingungen eine ausgezeichnete dauerhafte Sperrwirkung aufweist.

Die funktionelle Schicht ist ein nach dem Sol-Gel-Verfahren synthetisiertes anorganisch-organisches Hybridpolymer. Zu dessen Herstellung wird durch gesteuerte Hydrolyse und Kondensation von organisch modifizierten Si-Alkoxiden, d.h. organofunktionellen Silane, zunächst ein anorganisches Netzwerk aufgebaut. Ferner lässt sich das Netzwerk im genannten Sol-Gel-Prozess durch Cokondensation mit anderen Metallalkoxiden, insbesondere mit Aluminium-Alkoxiden, gezielt modifizieren. Die an einem anorganischen Netzwerk fixierten polymerisierbaren Gruppen werden nachfolgend thermisch, redoxinitiiert oder mittels energiereicher Strahlung (z.B. UV-Strahlung) miteinander vernetzt, d.h. es wird eine Polymerisation der organofunktionellen Gruppen durchgeführt, was den Aufbau eines zusätzlich organischen Netzwerkes bewirkt. Beispielsweise reaktive Methacrylat-, Epoxy- oder Vinylgruppen werden durch thermische oder photochemische Induktion polymerisiert. Zusätzlich können nicht vernetzbare organisch modifizierte Si-Alkoxide eingesetzt werden, welche keine organische Polymerisationsreaktionen eingehen und daher zu einer organischen Funktionalisierung des anorganischen Netzwerkes beitragen. Mit dem umschriebenen 2-stufigen Verfahren wird ein anorganisch-organisches Hybridpolymer aufgebaut. Das anorganisch-organische Hybridpolymer ist z.B. methylalkoholhaltig und vorzugsweise methylalkoholfrei.

Bei der Herstellung des anorganisch-organischen Hybridpolymers wird vorzugsweise wenigstens ein vernetzbares organofunktionelles Silan und insbesondere ein vernetzbares organofunktionelles Silan der folgenden Formel (I) eingesetzt:

$$R'_m SiX_{(4-m)} \qquad (I),$$

wobei die Gruppen X, die gleich oder verschieden sein können, Wasserstoff, Halogen, Alkoxy, Acyloxy, Alkylcarbonyl, Alkoxycarbonyl oder $-NR''_2$ (R'' = H und /oder Alkyl) bedeuten und die Reste R', die gleich oder verschieden sein können, Alkyl Alkenyl, Alkinyl, Aryl, Arylakyl, Alkylaryl, Arylakenyl, Alkenylaryl, Arylalkinyl oder Alkinylaryl darstellen, wobei diese Reste durch O- oder S-Atome oder die Gruppe -NR'' unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, wobei der Rest R' und/oder der Substituent ein vemetzbarer Rest und/oder Substituent sein muss.

Beispiele für vernetzbare, organofunktionelle Silane sind Vinyltrimethoxysilan, Aminopropyltriethoxysilan, Isocyanatopropyltriethoxysilan, Mercaptopropyltrimethoxysilan, Vinyltriethoxysilane, Vinylethyldichlorsilane, Vinylmethyldiacetoxysilane, Vinylmethyldichlorosilane, Vinylmethyldiethoxysilane, Vinyltriacetoxysilane, Vinyltrichlorsilane, Phenylvinyldiethoxysilane, Phenylallyldichlorsilane, 3-Isocyanotoporyltriethoxysilane, Methacryloxypropenyltrimethoxysilane, 3-Methacryloxypropyltrimethoxysilane.

Die erfindungsgemäss anwendbaren anorganisch-organische Hybridpolymere umfassen alle bisher im Stand der Technik bekannten anorganisch-organischen Hybridpolymere. Geeignete anorganisch-organische Hybridpolymere sind z.B. ORMOCER®e, wie sie namentlich in den Offenlegungsschriften DE 38 28 098 und DE 43 03 570 beschrieben sind, und auf welche explizit Bezug genommen wird. Ferner wird für eine nähere Beschreibung dieser ORMOCER®e und ihrer Zusammensetzung explizit auf die DE 196 50 286 verwiesen.

Nachfolgend wird die beispielhafte Zusammensetzung zweier geeigneter als ORMOCER®e bezeichnete Lacksysteme eines anorganisch-organischen Hybridpolymers beschrieben:

Lacksystem 1:

| TMOS | 30 bis 50, vorzugsweise 40 mol-% |
|---|---|
| Al(OBu$^s$)$_3$ | 10 bis 15, vorzugsweise 12,5 mol-% |
| GLYMO | 30 bis 35, vorzugsweise 32,5 mol-% |
| Zr(OPr)$_4$ | 5 bis 15, vorzugsweise 10 mol-% |
| AMEO | 3 bis 8, vorzugsweise 5 mol-% |

Dieses Lacksystem wird bei einer Temperatur von 130°C oder weniger thermisch ausgehärtet.

Lacksystem 2:

| MEMO | 60 bis 80, vorzugsweise 70 mol-% |
|---|---|
| Methacrylsäure | 10 bis 20, vorzugsweise 15 mol-% |
| Zr(OPr)$_4$ | 10 bis 20, vorzugsweise 15 mol-% |

Dieses Lacksystem wird durch photochemische oder thermische Induktion ausgehärtet.

Die Abkürzungen bedeuten:

| MEMO | 3-Methacryloxypropyltrimethoxysilan |
|---|---|
| TMOS | Tetramethoxysilan |
| Al(OBu$^s$)$_3$ | Aluminiumtrisekundärbutylat |
| GLYMO | 3-Glycidyloxypropyltrimethoxysilan |
| Zr(OPr)$_4$ | Zirkontetrapropylat |
| AMEO | 3-Aminopropyltriethoxysilan |

Die mit einer keramischen Dünnschicht beschichtete Trägerfolie des erfindungsgemässen Sterilgut-Verpackungsmaterials ist zweckmässig aus einem Polyester, insbesondere einem Polyethylenterephthalat (PET), einem Polyamid, insbesondere einem orientierten Polyamid (oPA), oder einem Polypropylen, insbesondere einem gegossenen Polypropylen (cPP). Die Trägerfolie kann beispielsweise, die äussere oder innere, frei liegende Folie im Folienverbund sein. Es können auch beidseits der erfindungsgemäss beschichteten Trägerfolie weitere Folien oder Schichten angeordnet, insbesondere aufkaschiert, sein, so dass die beschichtete Trägerfolie keine freie Oberfläche ausbildet. Ferner kann das Sterilgut-Verpackungsmaterial eine Folie aus einer erfindungsgemäss beschichteten und gegebenenfalls bedruckten Trägerfolie sein.

Mit äusserer, frei liegenden Folie ist die vom Verpackungsinhalt der daraus herzustellenden Verpackung abgewandte und eine freie, gegebenenfalls erfindungsgemäss beschichtete Oberfläche ausbildende Folie im Folienverbund zu verstehen, während mit der inneren, frei liegenden Folie die dem Verpackungsinhalt der daraus herzustellenden Verpackung zugewandte und eine freie, gegebenenfalls erfindungsgemäss beschichtete Oberfläche ausbildende Folie im Folienverbund zu verstehen ist.

Die Trägerfolie weist zweckmässig eine Dicke von 5 - 100 µm, vorzugsweise von 5 - 50 µm und insbesondere von 5 - 20 µm, auf.

Die keramische Dünnschicht ist vorzugsweise eine oxidische Dünnschicht, insbesondere ein Siliziumoxid der Formel $SiO_x$, wobei x eine Zahl von 1 bis 2 ist, oder ein Aluminiumoxid der Formel $Al_yO_z$, wobei y/z eine Zahl von 0,2 bis 1,5 darstellt, oder eine Mischung daraus. In bevorzugter erfindungsgemässer Ausführung ist die keramische Dünnschicht aus $SiO_2$ oder aus $Al_2O_3$ oder einer Mischung davon. Die keramische Dünnschicht kann neben den genannten Silizium- und Aluminiumoxiden ferner auch Oxide und/oder Nitride von Metallen und/oder Halbmetallen, z.B. diejenigen des Eisens, Nickels, Chroms, Tantals, Molybdäns, Hafniums, Titans, Yttriums, Zirkons, Magnesiums sowie Mischungen dieser Substanzen enthalten oder daraus bestehen.

Die keramische Dünnschicht weist eine Schichtdicke von 5 - 200 nm, vorzugsweise von 20 - 150 nm und insbesondere von 50 - 100 nm, auf. Die keramische Dünnschicht kann beispielsweise durch ein Vakuumdünnschichtverfahren, wie physikalische Beschichtungsverfahren (PVD-Verfahren) oder chemische Beschichtungsverfahren (CVD-Verfahren) mit und ohne Plasmaunterstützung, oder durch Sputtern aufgebracht werden. Bevorzugt werden physikalische Beschichtungsverfahren, insbesondere auf der Basis von Elektronenstrahlverdampfen, Widerstandsheizen oder induktivem Heizen aus Tiegeln.

Die funktionelle Schicht enthaltend oder bestehend aus einem anorganisch-organischen Hybridpolymer ist beispielsweise in einer Flächendichte von 0,1 bis 5 $g/m^2$ aufgetragen. In bevorzugter Ausführung ist die genannte funktionelle Schicht in einer Flächendichte zwischen 0,1 und 1 $g/m^2$ und insbesondere zwischen 0,5 und 1 $g/m^2$ auf die keramische Dünnschicht aufgetragen. Die funktionelle Schicht liegt beispielsweise in einer Schichtdicke von 0,1 bis 5 $\mu$m vor. Die funktionelle Schicht liegt in einer Schichtdicke von weniger als 1 $\mu$m, vorzugsweise von weniger als 0,8 $\mu$m und von mehr als 0,1 $\mu$m, vorzugsweise von mehr als 0,5 $\mu$m, vor.

Die funktionelle Schicht enthaltend oder bestehend aus einem anorganisch-organischen Hybridpolymer ist vorzugsweise mittels eines Druckverfahrens, insbesondere Tiefdruckverfahren, auf die keramische Dünnschicht appliziert. Die funktionelle Schicht kann jedoch auch mittels Streich-, Sprüh-, Walz-, Schleuder- oder Rakelverfahren auf die keramische Dünnschicht aufgebracht werden.

Auf die genannte funktionelle Schicht wird in besonderer Ausführung der Erfindung eine Bedruckung bzw. ein Konterdruck aufgebracht. Die Bedruckung ist vorzugsweise mittels eines Druckverfahrens, insbesondere eines Tiefdruckverfahrens, aufgebracht.

Die keramische Dünnschicht und die funktionelle Schicht enthaltend oder bestehend aus einem anorganisch-organischen Hybridpolymer können auf der dem Verpackungsinhalt zugewandten oder von diesem abgewandten Oberfläche der Trägerfolie angeordnet sein. Die genannte funktionelle Schicht bzw. dessen Bedruckung kann die äussere, frei liegende Oberfläche des Folienverbundes ausbilden. In bevorzugter Ausführung sind jedoch auf der funktionellen Schicht bzw. auf dessen Bedruckung, beispielsweise über einen Kaschierkleber, eine oder mehrere weitere Folien oder Verbundfolien aus z.B. Polyester, Polyamid oder Polypropylen angeordnet.

Die Folie oder der Folienverbund des Sterilgut-Verpackungsmaterials enthält vorzugsweise eine siegelbare innere, frei liegende Folie oder Schicht aus z.B. Polypropylen, insbesondere aus gegossenem Polypropylen (cPP). Die Trägerfolie kann selbst die siegelbare, innere, frei liegende Folie im Folienverbund ausbilden.

Das Sterilgut-Verpackungsmaterial kann Folien oder Schichten aus Polyester, insbesondere eine Trägerfolie aus Polyester, beispielsweise aus einem Polyethylenterephthalat (PET), wie A-PET, PETP, PETG oder G-PET, enthalten.

Weiters können die Folien oder Schichten und insbesondere die Trägerfolie aus Polyamid, beispielsweise aus einem Polyamid 6, Polyamid 11, Polyamid 12, Polyamid 6,6, Polyamid 6,10, Polyamid 6,12, oder Polyamid 6-3-T, sowie aus einem Gemisch davon sein. Die Folien aus Polyamid können unverstreckt oder mono- oder biaxial orientiert sein. Die Folien aus Polyamid sind, insbesondere im Einsatz als Trägerfolie, bevorzugt aus einem orientierten, insbesondere biaxial orientierten Polyamid.

Ferner kann das Sterilgut-Verpackungsmaterial Folien oder Schichten, insbesondere eine siegelbare, innere, frei liegende Folie oder Schicht aus Polypropylen, z.B. aus einem isotaktischen, syndiotaktischen oder ataktischen Polypropylen oder einem Gemisch davon enthalten. Das Polypropylen kann amorph, teilkristallin, kristallin oder hochkristallin sein. Das Polypropylen ist bevorzugt ein gegossenes Polypropylen.

Die einzelnen Folien des Folienverbundes sind vorzugsweise gegeneinander kaschiert. Der Kaschierkleber kann ein lösungsmittelhaltiger, lösungsmittelfreier oder wasserhaltiger Kaschierkleber und vorzugsweise ein Polyurethan-Kleber-System bzw. ein Polyester/Polyurethan-Kleber-System sein. Ferner können Klebstoffe, welche unter Einwirkung von energiereicher Strahlung (z.B. UV- oder Elektronen-Strahlen) aushärten, eingesetzt werden. Im Hinblick auf die bevorzugte Verwendung der Folie oder des Folienverbundes im Bereich der Nahrungsmittel sind physiologisch unbedenkliche Klebstoffsysteme zu bevorzugen. Besonders geeignete Klebstoffsysteme sind aliphatische Systeme. Der Kaschierkleber kann z.B. durch Giessen, Streichen, Sprühen, Rakeln, Glatt-Walzenauftrag usw., aufgetragen werden.

Die Folien der Verbundfolien können ferner über einen Haftvermittler und/oder Primer verbunden sein. Als Haftvermittler können beispielsweise Produkte auf Basis von Maleinsäure und modifiziertem Polypropylen eingesetzt werden.

Der Kaschierkleber, wie auch der Haftvermittler bzw. Primer, kann beispielsweise in Mengen von 0,5 bis 10 $g/m^2$, vorzugsweise in Mengen von 1 bis 8 $g/m^2$ und insbesondere in Mengen von 2 bis 6 $g/m^2$, angewendet werden. Der Kaschierkleber wie auch der Haftvermittler bzw. Primer kann auch in solchen Mengen angewendet werden, dass beispielsweise Schichten von 0,1 - 15 $\mu$m, vorzugsweise von 1 - 10 $\mu$m und insbesondere von 3 - 7 $\mu$m, Dicke ausgebildet werden.

In einer ersten Ausführung der Erfindung ist auf einer funktionellen Schicht eines anorganisch-organischen Hybridpolymers bzw. auf dessen Bedruckung der erfindungsgemäss beschichteten Trägerfolie aus Polyester, Polyamid oder Polypropylen der vorgenannten Art über einen Kaschierkleber eine Folie aus Polyamid, insbesondere orientiertem Polyamid (oPA), und auf dieser die ebenfalls mittels eines Kaschierklebers aufgebrachte siegelbare, innere, frei liegende Folie aus Polypropylen angeordnet. Die Trägerfolie bildet die äussere, frei liegende Folie des Verpackungsmaterials aus. Auf der genannten funktionellen Schicht kann eine Konterbedruckung aufgebracht sein.

In einer zweiten Ausführung besteht die Trägerfolie aus Polyester, Polypropylen oder Polyamid und vorzugsweise aus einem orientierten Polyamid, wobei die funktionelle Schicht eines anorganisch-organischen Hybridpolymers die äussere, frei liegende Oberfläche ausbildet. Auf der genannten funktionellen Schicht kann weiters eine Bedruckung angeordnet sein. Auf die Trägerfolie ist, z.B. mittels Kaschierkleber, die siegelfähige, innere, frei liegende Folie oder Schicht aus vorzugsweise Polypropylen, insbesondere aus gegossenem Polypropylen, angeordnet.

In einer dritten Ausführung der Erfindung ist auf einer funktionellen Schicht eines anorganisch-organischen Hybridpolymers der erfindungsgemäss beschichteten Trägerfolie aus Polyester, Polyamid oder Polypropylen der vorgenannten Art eine die siegelbare, innere, frei liegende Folie oder Schicht aus Polypropylen enthaltende Verbundfolie angeordnet. Die Verbundfolie kann eine coextrusionsbeschichtete, coextrudierte und/oder extrusionskaschierte Polyamid/Polypropylen-Folie sein, wobei die Folie oder Schicht aus Polypropylen die abschliessende Deckfolie bildet. Coextrudierte Schichten aus Polyamid sind vorteilhaft unverstreckt. Die Folien bzw. Schichten der Verbundfolie können über einen Haftvermittler und/oder Primer verbunden sein. Auf der genannten funktionellen Schicht kann ferner eine Konterbedruckung aufgebracht sein.

In einer vierten Ausführung der Erfindung ist unmittelbar auf einer funktionellen Schicht eines anorganisch-organischen Hybridpolymers einer erfindungsgemäss beschichteten Trägerfolie aus Polyester, Polyamid oder Polypropylen der vorgenannten Art über einen Kaschierkleber die siegelbare, innere, frei liegende Folie aus Polypropylen angeordnet. Zwischen der funktionellen Schicht eines anorganisch-organischen Hybridpolymers und der siegelbaren Folie kann ferner eine weitere mittels Kaschierkleber aufgebrachte Folie aus Polyester oder einem Polyamid, insbesondere einem orientiertem Polyamid, angeordnet sein. Auf der genannten funktionellen Schicht kann ferner eine Konterbedruckung aufgebracht sein.

Eine fünfte Ausführung eines erfindungsgemässen Sterilgut-Verpackungsmaterials besteht aus einer beschichteten Monofolie und enthält eine Trägerfolie aus einem Polypropylen der vorgenannten Art mit einer erfindungsgemässen Beschichtung, wobei eine funktionelle Schicht eines anorganisch-organischen Hybridpolymers die äussere, frei liegende Schicht des Verpackungsmaterials ist. Auf der freien Oberfläche der genannten funktionellen Schicht kann eine Bedruckung angeordnet sein. Die Trägerfolie ist gleichzeitig auch die siegelbare, dem Verpackungsinhalt zugewandte Folie.

Eine sechste Ausführung eines erfindungsgemässen Sterilgut-Verpackungsmaterials enthält eine erfindungsgemäss beschichtete Trägerfolie aus einem Polyester, Polyamid oder Polypropylen der vorgenannten Art mit einer keramischen Dünnschicht und auf dieser angeordnet eine funktionelle Schicht eines anorganisch-organischen Hybridpolymers. Auf der genannten funktionellen Schicht ist mittels Kaschierkleber eine weitere, gegebenenfalls konterbedruckte Kunststofffolie, vorzugsweise aus einem Polyester, aufgebracht. Auf der zweiten, der keramischen Dünnschicht abgewandten Seite der Trägerfolie ist eine oder mehrere weitere Kunststofffolien aufkaschiert, wobei eine dieser Kunststofffolien die siegelbare, innere, frei liegende Folie oder Schicht aus vorzugsweise einem Polypropylen ist.

Die siegelbare, innere, frei liegende Folie aus Polypropylen weist zweckmässig eine Dicke von 35 - 200 $\mu$m, vorzugsweise von 50 - 150 $\mu$m und insbesondere von 70 - 110 $\mu$m, auf. Die Folien aus Polyamid oder Polyester des Folienverbundes weisen zweckmässig eine Schichtdicke von 5 - 100 $\mu$m, vorzugsweise von 5 bis 50 $\mu$m und insbesondere von 10 bis 20 $\mu$m, auf.

Die coextrusionsbeschichtete, coextrudierte oder extrusionskaschierte Polyamid/Polypropylen-Folie kann beispielsweise eine Gesamtdicke von 30 bis 125 $\mu$m, vorzugsweise von 50 bis 90 $\mu$m und insbesondere von 60 bis 80 $\mu$m aufweisen. Die Dicke der Polyamidschicht in der Polyamid/Polypropylen-Folie kann beispielsweise 5 bis 50 %, zweckmässig 10 bis 30 % und insbesondere 15 bis 25 % der Gesamtdicke der coextrusionsbeschichteten, coextrudierten, resp. extrusionskaschierten Folie betragen.

Die flexiblen Sterilgut-Verpackungsmaterialien weisen zweckmässig Gesamtdicken von 10 - 1000 $\mu$m, vorzugsweise von 20 - 500 $\mu$m und insbesondere von 30 - 200 $\mu$m auf.

Jede der im Folienverbund eingesetzten Folie erfüllt eine spezifische Funktion. Auf der Trägerfolie sind die keramische Dünnschicht und die funktionelle Schicht eines anorganisch-organischen Hybridpolymers aufgebracht. Ferner erhöht die Trägerfolie die Festigkeit des Verpackungsmaterials. Die fallweise eingesetzten weiteren Folien aus Polyamid oder Polyester wirkt stützend und festigkeitserhöhend im Folienverbund. Die in der Regel verhältnismässig dick gewählte innere, frei liegende Folie aus Polypropylen verbessert die Durchstossfestigkeit und ist zudem siegelbar.

Die Erfindung betrifft ferner ein Verfahren zur Herstellung eines flexiblen Sterilgut-Verpackungsmaterials aus einem Folienverbund mit Barriereeigenschaften enthaltend eine Trägerfolie aus Polyamid, Polyester oder Polypropylen und darauf angeordnet eine keramische Dünnschicht.

Das Verfahren zeichnet sich dadurch aus, dass auf die keramische Dünnschicht der Trägerfolie in einer Druckeinheit mittels eines Druckverfahrens eine funktionelle Schicht enthaltend oder bestehend aus einem anorganisch-organischen Hybridpolymer aufgetragen und fixiert, d.h. gehärtet, wird. Die genannte funktionelle Schicht wird vorzugsweise in einer Flächendichte von weniger als 1 g/m$^2$ aufgetragen.

Die funktionelle Schicht enthaltend oder bestehend aus einem anorganisch-organischen Hybridpolymer wird bevorzugt in einem Druckverfahren, insbesondere in einem Tiefdruckverfahren, auf die keramische Dünnschicht appliziert und thermisch oder mittels energiereicher Strahlung gehärtet. Das unmittelbar auf den Schichtauftrag folgende Härten der genannten funktionellen Schicht ist zweckmässig Teil des Druckprozesses, insbesondere des Tiefdruckprozesses. Ein thermisches Härten geschieht vorzugsweise bei Temperaturen von kleiner 130°C, insbesondere von kleiner 100°C.

In Bevorzugter Ausführung der Erfindung wird auf die funktionelle Schicht enthaltend oder bestehend aus einem anorganisch-organischen Hybridpolymer ferner mittels eines Druckverfahrens, insbesondere mittels eines Tiefdruckverfahrens, eine Bedruckung oder Konterbedruckung aufgebracht. Der Auftrag der genannten funktionellen Schicht und die Bedruckung in einem Druckverfahren, insbesondere im Tiefdruckverfahren, geschieht vorzugsweise inline in unmittelbar aufeinanderfolgenden Schritten. Der Auftrag der funktionellen Schicht und der Bedruckung geschieht bevorzugt mit demselben Druckverfahren.

Der Auftrag der besagten funktionellen Schicht und die Bedruckung oder Konterbedruckung erfolgen bevorzugt in einer gemeinsamen Druckeinheit. Die funktionelle Schicht wird zweckmässig an einer ersten Druckstation in einem Druckdurchgang bzw. Druckoperation aufgebracht und fixiert, vorzugsweise thermisch fixiert. An einer oder mehreren nachfolgenden Druckstationen wird in einem oder mehreren Druckdurchgängen bzw. Druckoperationen eine Bedruckung oder Konterbedruckung auf die funktionelle Schicht aufgebracht und fixiert, insbesondere thermisch fixiert.

In nachfolgenden Verfahrensschritten können weitere Folien auf die gegebenenfalls bedruckte, funktionelle Schicht enthaltend oder bestehend aus einem anorganisch-organischen Hybridpolymer aufkaschiert werden. Die Herstellung des fertigen Folienverbundes als Sterilgut-Verpackungsmaterial erfolgt zweckmässig anhand bekannter Verfahrensschritten. Bevorzugt wird in ersten erfindungsgemässen Verfahrensschritten die Trägerfolie erfindungsgemäss mit einer funktionellen Schicht und gegebenenfalls einer Bedruckung versehen und gegebenenfalls in nachfolgenden Verfahrensschritten mit weiteren Folien zu einem Folienverbund als Sterilgut-Verpackungsmaterial zusammengeführt.

Vorliegende Erfindung betrifft auch die Verwendung der erfindungsgemässen Folie oder Folienverbundes zur Herstellung von Sterilgut-Verpackungen, d.h. sterilisierbaren Verpakkungen, vorzugsweise von Sterilgut-Verpackungen für Nahrungsmittel für Mensch und Tier.

Die erfindungsgemässe Folie oder Folienverbund findet insbesondere Verwendung zur Herstellung von sterilisierfähigen Beutelverpackungen. Solche sterilisierfähigen Beutelverpakkungen können beispielsweise aus einem Abschnitt des Verbundmaterials durch Falten und Siegeln oder aus zwei Seitenteilen aus dem vorliegenden Verbundmaterial durch -- gegebenenfalls Falten und -- Siegeln oder aus mehreren Seitenteilen aus dem Verbundmaterial durch -- gegebenenfalls Falten und -- Siegeln, geformt werden. Typische Beutelverpackungen sind Flachbeutel, Standbeutel, Siegelrandbeutel, Raumbeutel, standfähige Raumbeutel, Seitenrand-Flachbeutel, Klotzbodenbeutel, oder auch Säcke, wie geschweisste Flach- oder Faltensäcke, usw. Die sterilisierfähigen Beutelverpackungen ihrerseits können für Füllgüter, wie stückige, breiige, pastöse, halbflüssige oder flüssige Nahrungsmittel für Mensch und Tier oder für Genussmittel verwendet werden. Weitere beispielhafte Anwendungen derartiger Beutel sind Kosmetika oder Körperpflegemittel in pastöser bis flüssiger Form. Andere Beispiele sind pharmazeutische Produkte oder Heilmittel. Ferner kann die erfindungsgemässe Folie oder Folienverbund zur Herstellung von sterilisierfähigen Deckelfolien, insbesondere peelbaren (ablösbaren) Deckelfolien für Becher oder Schalen aus z.B. Polypropylen verwendet werden. Die genannten Deckelfolien werden insbesondere als Packmittel für Becherverpackungen für Joghurts oder Früchtecocktails eingesetzt.

Die Folie bzw. der Folienverbund nach vorliegender Erfindung sind ohne Delamination der einzelnen Schichten oder Festigkeitsverlust, sterilisierbar, beispielsweise durch eine Hitzebehandlung bei 110 bis 140°C, vorzugsweise 121°C bis 135°C, während 10 bis 60 Minuten, vorzugsweise während 30 Minuten. Ferner eignet sich das erfindungsgemässe Sterilgut-Verpackungsmaterial auch zur Herstellung von Verpackungen zum Pasteurisieren oder Heissabfüllen von Nahrungsmitteln bei Temperaturen von z.B. über 80°C.

Das erfindungsgemässe Sterilgut-Verpackungsmaterial zeigt im Vergleich zu herkömmlichen Sterilgut-Verpackungsmaterialien ohne funktionelle Schicht aus einem anorganisch-organischen Hybridpolymers auch nach einer Beanspruchung unter extremen Sterilisationsbedingung eine ausgezeichnete und dauerhafte Erhaltung der Barriereeigenschaften gegenüber Gasen wie Sauerstoff und Wasserdampf. Die vorteilhaften Eigenschaften werden überraschenderweise bereits bei vergleichsweise sehr dünnen funktionellen Schichten erreicht, weshalb trotz Einsatz verhältnismässig teurer solcher funktionellen Schichten, wie z.B. ORMOCER®e, die Wirtschaftlichkeit gegeben ist.

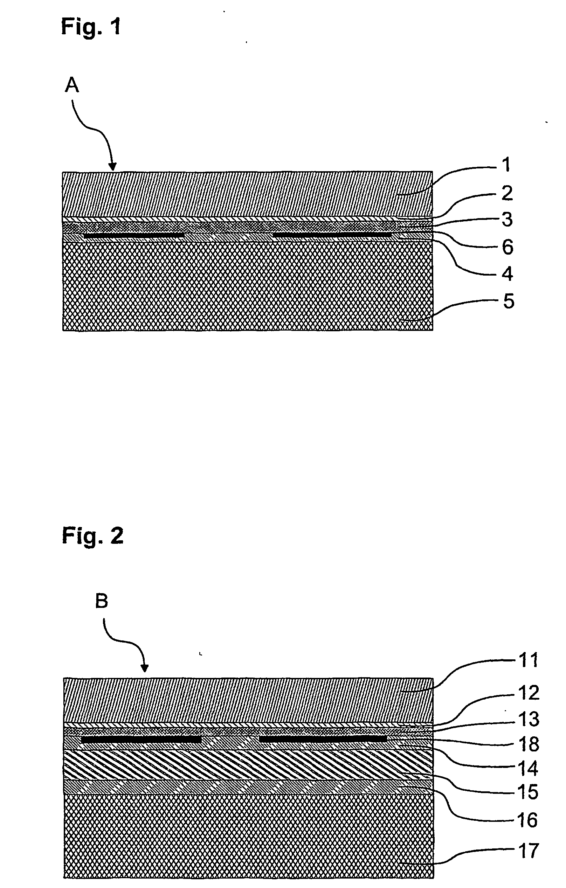

Im Folgenden wird mit Bezug auf die Fig. 1, 2, 3, 4 und 5 der schematische Aufbau mehrerer Ausführungsvarianten erfindungsgemässer Sterilgut-Verpackungsmaterialien näher erläutert.

Der Folienverbund A gemäss Fig. 1 enthält eine erste, aussen liegende Folie 1 aus Polyethylenterephthalat (PET) mit einer Dicke von 12 μm, auf welche eine keramische Dünnschicht 2 aus $SiO_2$ mit einer Dicke von 50 nm angeordnet ist. Die Trägerfolie kann auch aus orientiertem Polyamid (oPA) oder aus Polypropylen, insbesondere aus gegossenem Polypropylen (cPP) bestehen. Auf die keramische Dünnschicht 2 ist eine funktionelle Schicht eines anorganisch-organischen Hybridpolymers 3 mit einer Schichtdicke von 0,5 μm angeordnet. Eine Bedruckung 6 kann fallweise auf die genannte funktionelle Schicht 3 aufgebracht sein. Auf die genannte funktionelle Schicht 3 bzw. auf dessen Bedruckung 6 ist über einen Kaschierkleber 4 die siegelbare, innere, frei liegende Folie 5 aus Polypropylen angeordnet. Die Folie 5 aus Polypropylen weist eine Dicke von 110 μm auf. Der Kaschierkleber basiert auf einem Polyurethan-Polyethylenterephthalat (PET) (PUR/PET)-Zweikomponentenklebersystem und liegt in einer Dicke von 5 μm vor.

Der Folienverbund B gemäss Fig. 2 enthält eine Trägerfolie 11 aus Polyethylenterephthalat (PET) mit einer Dicke von 12 μm, auf welche eine keramische Dünnschicht 12 aus SiO$_2$ mit einer Dicke von 50 nm angeordnet ist. Die Trägerfolie kann auch aus orientiertem Polyamid (oPA) oder aus Polypropylen, insbesondere aus gegossenem Polypropylen (cPP) bestehen. Auf die keramische Dünnschicht 12 ist eine funktionelle Schicht eines anorganisch-organischen Hybridpolymers 13 mit einer Schichtdicke von 0,5 μm angeordnet. Eine Bedruckung 18 kann fallweise auf die genannte funktionelle Schicht 13 aufgebracht sein. Auf die funktionelle Schicht 13 ist über einen Kaschierkleber 14 eine Folie 15 aus Polyamid angeordnet, auf welche wiederum über eine Kaschierkleber 16 die siegelbare, innere, frei liegende Folie 17 aus Polypropylen angeordnet ist. Die Folie aus Polyamid 15 besteht aus biaxial orientiertem Polyamid einer Dicke von 15 μm. Die Folie 17 aus Polypropylen weist eine Dicke von 75 μm auf. Der Kaschierkleber basiert auf einem PUR-Zweikomponentenklebersystem und liegt in einer Dicke von 5 μm vor.

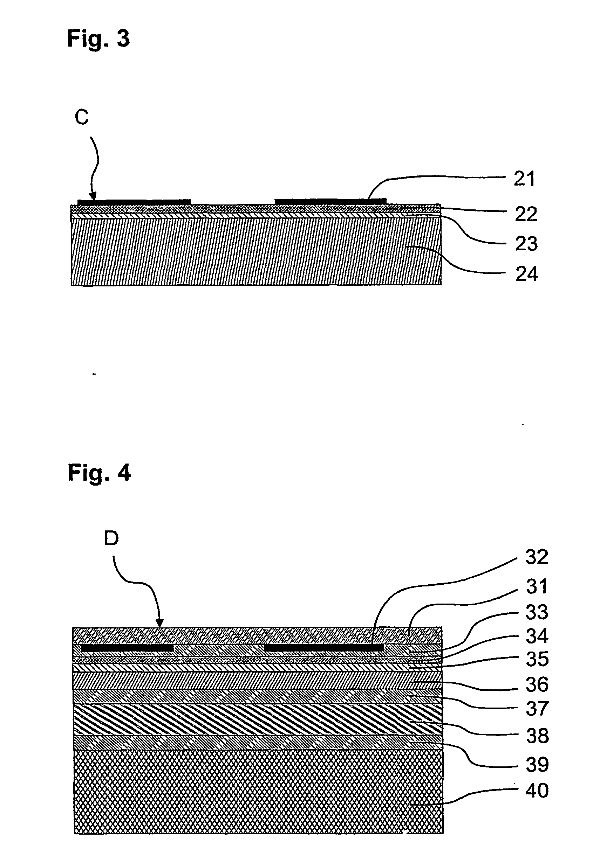

Die Folie C gemäss Fig. 3 besteht aus einer Monofolie mit einer Trägerfolie 24 aus Polypropylen mit einer Dicke von 75 μm, welche zugleich die siegelbare Folie ist. Auf die Trägerfolie ist die keramische Dünnschicht 23 aus SiO$_2$ mit einer Dicke von 50 nm angeordnet. Auf die keramische Dünnschicht 23 ist eine funktionelle Schicht eines anorganisch-organischen Hybridpolymers 22 mit einer Schichtdicke von 0,5 μm angeordnet. Eine Bedruckung 21 ist fallweise auf der genannten funktionellen Schicht 22 angeordnet. Die funktionelle Schicht 22 bzw. dessen Bedruckung 21 bildet die äussere, frei liegende Schicht der Folie C aus.

Der Folienverbund D gemäss Fig. 4 enthält eine siegelbare, innere, frei liegende Folie 40 aus Polypropylen, insbesondere aus gegossenem Polypropylen (cPP), mit einer Dicke von 75 μm. Auf der siegelbaren Folie 40 ist über einen Kaschierkleber 39 eine Folie 38 aus biaxial orientiertem Polyamid angeordnet, auf welche wiederum über einen Kaschierkleber 37 eine Trägerfolie 36 angeordnet ist. Die Trägerfolie 36 enthält eine keramische Dünnschicht 35 aus SiO$_2$ mit einer Dicke von 50 nm, auf welcher eine funktionelle Schicht eines anorganisch-organischen Hybridpolymers 34 mit einer Schichtdicke von 0,5 μm angeordnet ist. Auf die genannte funktionelle Schicht 34 ist über einen Kaschierkleber 33 eine mit einem Konterdruck 32 bedruckte äussere, frei liegende Folie 31 aus Polyethylenterephthalat (PET) mit einer Dicke von 12 μm angeordnet. Der Kaschierkleber basiert auf einem PUR-Zweikomponentenklebersystem und liegt in einer Dicke von 5 μm vor.

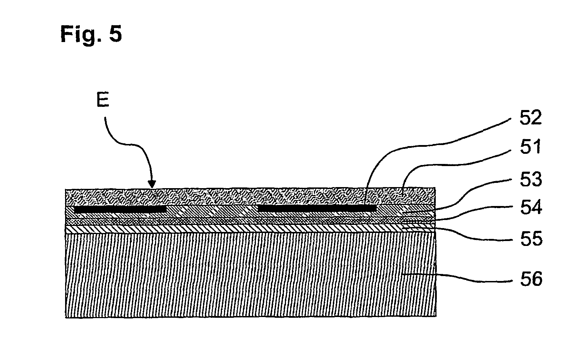

Der Folienverbund E gemäss Fig. 5 enthält eine siegelbare, innere, frei liegende Trägerfolie 56 aus Polypropylen, insbesondere aus gegossenem Polypropylen (cPP), mit einer Dicke von 75 μm. Auf der Trägerfolie 56 ist eine keramische Dünnschicht 55 aus SiO$_2$ in einer Dicke von 50 nm abgeschieden, auf welcher wiederum eine funktionelle Schicht eines anorganisch-organischen Hybridpolymers 54 mit einer Schichtdicke von 0,5 μm angeordnet ist. Auf die genannte funktionelle Schicht 54 ist über einen Kaschierkleber 53 eine mit einem Konterdruck 52 bedruckte äussere, frei liegende Folie aus Polyethylenterephthalat (PET) 51 mit einer Dicke von 12 μm angeordnet. Der Kaschierkleber basiert auf einem PUR-Zweikomponentenklebersystem und liegt in einer Dicke von 5 μm vor.

Nachfolgende Tabellen zeigen Vergleichsmessungen der Sauerstoffdurchlässigkeit der Folienverbund A bzw. B mit herkömmlichen Folienverbunden ohne funktionelle Schicht eines anorganisch-organischen Hybridpolymers, wobei die Folienverbunde unterschiedlichen Sterilisationsbedingungen ausgesetzt waren. Die angegebenen Messwerte in der Tabelle entsprechen Einzelmessungen. Die Sauerstoffdurchlässigkeit ist in cm$^3$/m$^2$ pro bar [b] und pro Tag [d] angegeben. "Geflext" bedeutet biege-beansprucht durch abwechslungsweises Falten und Geradebiegen des Folienverbundes. Tab. A.1 - A.5 wiedergibt Messergebnisse mit dem Folienverbund A, wobei diese für Vergleichszwecke insoweit modifiziert wurde, dass die funktionelle Schicht eines anorganisch-organischen Hybridpolymers gemäss Angaben in Tab. A.2 - A.5 unterschiedliche Schichtdicken aufweisen kann oder weggelassen oder durch eine herkömmliche Lackschicht ersetzt sein kann.

Tab. B.1 - B.2 wiedergibt Messergebnisse mit dem Folienverbund B, wobei diese für Vergleichszwecke insoweit modifiziert wurde, dass die funktionelle Schicht eines anorganisch-organischen Hybridpolymers gemäss Angaben in Tab. B.2 durch eine herkömmliche Lackschicht ersetzt sein kann.

Folienverbund A, mit einer funktionellen Schicht eines anorganisch-organischen Hybridpolymers in einer Auftragsmenge von 0,5 g/m$^2$ :

Tab. A.1

| Sterilisationsbedingungen | Sauerstoffdurchlässigkeit [cm$^3$/m$^2$·d·b] |
|---|---|
| 121°C während 30 Minuten | 0,2 / 0,2 |
| 121°C während 30 Minuten, 20 x mal geflext | 1,0 / 1,0 |
| 135°C während 30 Minuten | 0,2 / 0,3 |
| 135°C während 30 Minuten, 20x geflext | 1,1 / 1,3 |

Folienverbund A, mit einer funktionellen Schicht eines anorganisch-organischen Hybridpolymers in einer Auftragsmenge von 1,0 g/m$^2$ :

Tab. A.2

| Sterilisationsbedingungen | Sauerstoffdurchlässigkeit [cm$^3$/m$^2$·d·b] |
|---|---|
| 121°C während 30 Minuten | 0,1 / 0,3 |
| 121°C während 30 Minuten, 20x geflext | 0,8/1,2 |
| 135°C während 30 Minuten | 0,3 / 0,4 |
| 135°C während 30 Minuten, 20x geflext | 1,0 / 0,5 |

Folienverbund A, mit einer funktionellen Schicht eines anorganisch-organischen Hybridpolymers in einer Auftragsmenge von 0,5 g/m$^2$ und einer auf der genannten funktionellen Schicht angeordneten Bedruckung:

Tab. A.3

| Sterilisationsbedingungen | Sauerstoffdurchlässigkeit [cm$^3$/m$^2$·d·b] |
|---|---|
| 121°C während 30 Minuten | 0,1 / 0,1 / 0,2 / 0,2 |
| 121°C während 30 Minuten, 20x geflext | --- |
| 135°C während 30 Minuten | 0,1 / 0,2 / 0,2 / 0,3 |
| 135°C während 30 Minuten, 20x geflext | --- |

Folienverbund A, mit einem herkömmlichen PVC-Lacksystem in einer Auftragsmenge von 1,0 g/m$^2$ anstelle einer funktionellen Schicht eines anorganisch-organischen Hybridpolymers:

Tab. A.4

| Sterilisationsbedingungen | Sauerstoffdurchlässigkeit [cm$^3$/m$^2$·d·b] |
|---|---|
| 121°C während 30 Minuten | 0,8 / 0,8 |
| 121°C während 30 Minuten, 20x geflext | --- |
| 135°C während 30 Minuten | 13,1 / 18,4 |
| 135°C während 30 Minuten, 20x geflext | --- |

Folienverbund A, mit einem herkömmlichen PET/PUR-Lacksystem in einer Auftragsmenge von 1,0 g/m$^2$ anstelle einer funktionellen Schicht eines anorganisch-organischen Hybridpolymers:

Tab. A.5

| Sterilisationsbedingungen | Sauerstoffdurchlässigkeit [cm$^3$/m$^2$·d·b] |
|---|---|
| 121°C während 30 Minuten | 0,6 / 1,0 |
| 121°C während 30 Minuten, 20x geflext | --- |
| 135°C während 30 Minuten | 8,0 / 17,1 |
| 135°C während 30 Minuten, 20x geflext | --- |

Folienverbund A, ohne funktionelle Schicht eines anorganisch-organischen Hybridpolymers und ohne diese funktionelle Schicht ersetzende Lackschicht:

Tab. A.6

| Sterilisationsbedingungen | Sauerstoffdurchlässigkeit [cm$^3$/m$^2$·d·b] |
|---|---|
| 121°C während 30 Minuten | 0,9 / 1,1 |
| 121°C während 30 Minuten, 20x geflext | 9,6 / 11,3 |
| 135°C während 30 Minuten | 27,8 / 28,3 |
| 135°C während 30 Minuten, 20x geflext | --- |

Folienverbund B, mit einer funktionellen Schicht eines anorganisch-organischen Hybridpolymers in einer Auftragsmenge von 0,5 g/m$^2$ :

Tab. B.1

| Sterilisationsbedingungen | Sauerstoffdurchlässigkeit [cm$^3$/m$^2$·d·b] |
|---|---|
| 121°C während 30 Minuten | 0,3 / 0,4 |
| 121°C während 30 Minuten, 20x geflext | 2,7 / 2,9 |
| 135°C während 30 Minuten | 0,3 / 0,3 |
| 135°C während 30 Minuten, 20x geflext | 2,5 / 5,6 |

Folienverbund B, mit einer Lack-Schicht in einer Auftragsmenge von 0,5 g/m$^2$ anstelle einer funktionellen Schicht eines anorganisch-organischen Hybridpolymers, wobei die Herstellung des Lackes nach der Lehre gemäss der Patentschrift US 5,645,923 der Firma Toppan Printing Co. Ltd. ausgeführt wurde und dessen Zusammensetzung einer der in der genannten Patentschrift offenbarten Ausführungsvarianten entspricht:

Tab. B.2

| Sterilisationsbedingungen | Sauerstoffdurchlässigkeit [cm$^3$/m$^2$·d·b] |
|---|---|
| 121°C während 30 Minuten | 0,6 / 0,7 / 0,9 / 2,2 |
| 121°C während 30 Minuten, 20x geflext | 3,6 / 4,3 |
| 135°C während 30 Minuten | 2,9 / 4,7 |
| 135°C während 30 Minuten, 20x geflext | 13,1 / 13,8 |

Die Messergebnisse zeigen, dass bei der erfindungsgemässen Anwendung einer sehr dünnen funktionellen Schicht eines anorganisch-organischen Hybridpolymers im Folienverbund die Barriereeigenschaften bei Erhöhung der Sterilisationstemperatur von 121°C auf 135°C kaum beeinträchtigt werden. Wird jedoch derselbe Folienverbund ohne funktionelle Schicht eines anorganisch-organischen Hybridpolymers oder gegebenenfalls mit einer gewöhnlichen Schutzlackschicht anstelle der genannten funktionellen Schicht denselben Sterilisationsbedingungen ausgesetzt, so zeigt sich, dass die Erhöhung der Sterilisationstemperatur von 121°C auf 135°C eine massive Beeinträchtigung der Barriereeigenschaften mit sich bringt. Die Sauerstoffdurchlässigkeit nimmt in diesen Fällen bei einer Erhöhung der Sterilisationstemperatur gemäss Versuchsreihe um teilweise mehr als das 10-fache zu.

**Patentansprüche**

**1.** Verwendung eines flexiblen Verpackungsmaterials aus einer Folie oder einem Folienverbund (B) mit Barriereeigenschaften zur Herstellung von Sterilgut-Packungen, die während des Sterilisationsprozesses thermischen Sterilisationsbedingungen ausgesetzt werden, wobei das Verpackungsmaterial eine Trägerfolie (11) aus Polyamid, Polyester oder Polypropylen umfaßt, wobei auf der Trägerfolie (11) eine keramische Dünnschicht (12) einer Dicke von 5 bis 200 nm und auf der keramischen Dünnschicht (12) eine funktionelle Schicht (13) angeordnet sind, und die funktionelle Schicht (13) eine Schichtdicke von weniger als 1 µm aufweist und aus einem nach einem Sol-Gel-Verfahren synthetisierten anorganisch-organischen Hybridpolymer besteht, und das anorganisch-organische Hybridpolymer (13) ein durch gesteuerte Hydrolyse und Kondensation von organisch modifizierten Si-Alkoxiden erzeugtes anorganisches Netzwerk enthält, und am anorganischen Netzwerk fixierte polymerisierbare, organofunktionelle Gruppen thermisch, redoxinitiiert oder mittels energiereicher Strahlung durch Polymerisation miteinander zu einem organischen Netzwerk vernetzt sind.

2. Verwendung nach Anspruch 1, **dadurch gekennzeichnet, dass** das anorganische Netzwerk mit weiteren Metallalkoxiden, vorzugsweise mit Aluminium-Alkoxiden, modifiziert ist.

3. Verwendung nach einem der Ansprüche 1 bis 2, **dadurch gekennzeichnet, dass** die funktionelle Schicht enthaltend oder bestehend aus einem anorganisch-organischen Hybridpolymer eine Schichtdicke von weniger als 0,8 µm, und von mehr als 0,1 µm, vorzugsweise von mehr als 0,5 µm, aufweist.

4. Verwendung nach einem der Ansprüche 1 bis 3, **dadurch gekennzeichnet, dass** der Folienverbund (B) eine siegelbare, innere, frei liegende Folie (17) oder eine Verbundfolie mit einer siegelbaren inneren, frei liegenden Schicht enthält, wobei die siegelbare Folie die Trägerfolie selbst oder eine weitere Folie oder Schicht im Folienverbund sein kann.

5. Verwendung nach Anspruch 4, **dadurch gekennzeichnet, dass** die siegelbare, innere, frei liegende Folie (5) oder die Verbundfolie über einen Kaschierkleber (4) auf der funktionellen Schicht enthaltend oder bestehend aus einem anorganisch-organischen Hybridpolymer (3) der Trägerfolie (1) angeordnet ist.

6. Verwendung nach einem der Ansprüche 4 bis 5, **dadurch gekennzeichnet, dass** die siegelbare, innere, frei liegende Folie oder wenigstens die siegelbare innere, frei liegende Folie oder Schicht der Verbundfolie eine aus einem Polypropylen, insbesondere aus gegossenem Polypropylen, ist.

7. Verwendung nach einem der Ansprüche 4 bis 6, **dadurch gekennzeichnet, dass** die Verbundfolie eine coextrusionsbeschichtete, coextrudierte und/oder extrusionskaschierten Polyamid/Polypropylen-Folie ist.

8. Verwendung nach einem der Ansprüche 1 bis 7, **dadurch gekennzeichnet, dass** auf der funktionellen Schicht enthaltend oder bestehend aus einem anorganisch-organischen Hybridpolymer (13) über einen Kaschierkleber (14) eine Folie (15) aus Polyamid, vorzugsweise orientiertem Polyamid, und auf dieser die mittels Kaschierkleber (16) aufgebrachte siegelbare, innere, frei liegende Folie (17) oder die Verbundfolie mit einer siegelbaren, inneren, frei liegenden Schicht angeordnet ist.

9. Verwendung nach einem der Ansprüche 1 bis 8, **dadurch gekennzeichnet, dass** die auf die Trägerfolie (11) aufgebrachte keramische Dünnschicht (12) eine Schichtdicke von 5 - 200 nm, vorzugsweise von 20 - 150 nm und insbesondere von 50 - 100 nm aufweist.

10. Verwendung nach einem der Ansprüche 1 bis 9, **dadurch gekennzeichnet, dass** die siegelbare, innere, frei liegende Folie (5) eine Dicke von 50 - 200 µm, vorzugsweise von 60 - 120 µm und insbesondere von 70 - 100 µm aufweist.

11. Verwendung nach einem der Ansprüche 1 bis 10, **dadurch gekennzeichnet, dass** der Kaschierkleber (4, 14, 16) ein lösungsmittelhaltiger, lösungsmittelfreier oder wasserhaltiger Kaschierkleber und vorzugsweise ein Polyurethan-Kleber-System oder Polyester/Polyurethan-Kleber-System ist und der Kaschierkleber (4, 14, 16) in Schichtdicken von 2 - 15 µm, vorzugsweise von 3 - 10 µm, insbesondere von 3 - 7 µm, aufgetragen ist.

12. Verwendung nach einem der Ansprüche 1 bis 11, **dadurch gekennzeichnet, dass** die Trägerfolie (11) aus orientiertem Polyamid, insbesondere aus biaxial orientierten Polyamid (opA), oder aus Polyethylenterephthalat (PET) besteht.

13. Verwendung nach einem der Ansprüche 1 bis 12, **dadurch gekennzeichnet, dass** die Trägerfolie (11) eine Dicke von 5 - 100 µm, vorzugsweise von 5 - 50 µm, insbesondere von 10 - 20 µm, aufweist.

14. Verwendung nach einem der Ansprüche 1 bis 13, **dadurch gekennzeichnet, dass** die keramische Dünnschicht (12) aus einem Siliziumoxid der Formel $SiO_x$ ist, wobei x eine Zahl von 1 bis 2 ist, oder aus einem Aluminiumoxid der Formel $Al_yO_z$ ist, wobei y/z eine Zahl von 0,2 bis 1,5 darstellt, oder aus einer Kombination davon ist.

**15.** Verwendung nach einem der Ansprüche 1 bis 14, **dadurch gekennzeichnet, dass** die keramische Dünnschicht (12) aus einem $SiO_2$ oder aus einem $Al_2O_3$ oder einer Kombination davon ist.

**16.** Verwendung nach einem der Ansprüche 1 bis 15, wobei das Verpackungsmaterial eine Beutelverpackung oder eine Deckelfolie ist.

**17.** Verwendung nach einem der Ansprüche 1 bis 16, wobei das Verpackungsmaterial thermischen Sterilisationsbedingungen von 120 - 140°C, vorzugsweise von 130-135°C, während 10 bis 60 Minuten ausgesetzt ist.

**18.** Verfahren zur Herstellung eines flexiblen Sterilgut-Verpackungsmaterials den gemäß Anspruch 1 zu verwendenden Art, **dadurch gekennzeichnet, dass** die funktionelle Schicht auf die keramische Dünnschicht (12) der Trägerfolie (11) in einer Druckeinheit mittels eines Druckverfahrens aufgetragen und fixiert wird.

**19.** Verfahren nach Anspruch 18, **dadurch gekennzeichnet, dass** die funktionelle Schicht enthaltend oder bestehend aus einem anorganisch-organischen Hybridpolymer (13) in einer Flächendichte von weniger als 1 $g/m^2$, vorzugsweise von weniger als 0,8 $g/m^2$ und von mehr als 0,1 $g/m^2$, vorzugsweise von mehr als 0,5 $g/m^2$ aufgetragen wird.

**20.** Verfahren nach einem der Ansprüche 18 bis 19, **dadurch gekennzeichnet, dass** die funktionelle Schicht enthaltend oder bestehend aus einem anorganisch-organischen Hybridpolymer (13) in einem Tiefdruckverfahren auf die keramische Beschichtung appliziert wird.

**21.** Verfahren nach einem der Ansprüche 18 bis 20, **dadurch gekennzeichnet, dass** auf die funktionelle Schicht enthaltend oder bestehend aus einem anorganisch-organischen Hybridpolymer (13) mittels eines Druckverfahrens, insbesondere mittels eines Tiefdruckverfahrens, eine Bedruckung oder Konterbedruckung (18) aufgebracht wird.

**22.** Verfahren nach einem der Ansprüche 18 bis 21, **dadurch gekennzeichnet, dass** der Auftrag der funktionellen Schicht enthaltend oder bestehend aus einem anorganisch-organischen Hybridpolymer (13) und die Bedruckung oder Konterbedruckung (18) in einer gemeinsamen Druckeinheit ausgeführt werden, und die funktionelle Schicht (13) an einer ersten Druckstation in einem Druckdurchgang aufgebracht und fixiert, vorzugsweise thermisch fixiert wird und die Bedruckung oder Konterbedruckung (18) an einer oder mehreren nachfolgenden Druckstationen in einem oder mehreren Druckdurchgängen aufgebracht und fixiert, insbesondere thermisch fixiert, wird.

## Claims

**1.** Use of a flexible packaging material for the production of packagings for sterile products made of a film or a film composite (B) with barrier properties, which packagings are subjected to thermal sterilisation conditions during the sterilisation process, wherein the packaging material comprises a backing film (11) made of polyamide, polyester or polypropylene, a thin ceramic layer (12) with a thickness of 5 to 200 nm being arranged on the backing film (11) and a functional layer (13) being arranged on the thin ceramic layer (12), and the functional layer (13) has a layer thickness of less than 1 µm and consists of an inorganic-organic hybrid polymer synthesised by a sol-gel method, and the inorganic-organic hybrid polymer (13) contains an inorganic network produced by controlled hydrolysis and condensation of organically modified Si-alkoxides and polymerisable organofunctional groups fixed to the inorganic network are cross-linked with one another by polymerisation thermally, by redox initiation, or by means of energy rich radiation to form an organic network.

**2.** Use according to claim 1, **characterised in that** the inorganic network is modified with further metal alkoxides, preferably with aluminium alkoxides.

**3.** Use according to either of claims 1 or 2, **characterised in that** the functional layer, containing or consisting of an inorganic-organic hybrid polymer, has a layer thickness of less than 0.8 µm and more than 0.1 µm, preferably more than 0.5 µm.

**4.** Use according to any one of claims 1 to 3, **characterised in that** the film composite (B) comprises a sealable inner exposed film (17) or a composite film with a sealable inner exposed layer, wherein the sealable film may be the backing film itself or a further film or layer in the film composite.

5. Use according to claim 4, **characterised in that** the sealable inner exposed film (5) or the composite film is arranged by way of a laminating adhesive (4) on the functional layer comprising or consisting of an inorganic-organic hybrid polymer (3) of the backing film (1).

6. Use according to either of claims 4 to 5, **characterised in that** the sealable inner exposed film or at least the sealable inner exposed film or layer of the composite film is a film made of polypropylene, in particular of cast polypropylene.

7. Use according to any one of claims 4 to 6, **characterised in that** the composite film is a coextrusion-coated, coextruded and/or extrusion-laminated polyamide/polypropylene film.

8. Use according to any one of claims 1 to 7, **characterised in that** a film (15) made of polyamide, preferably oriented polyamide, is arranged by way of a laminating adhesive (14) on the functional layer containing or consisting of an inorganic-organic hybrid polymer (13), and the sealable inner exposed film (17) which is applied by means of laminating adhesive (16), or the composite film with a sealable inner exposed layer, is arranged on this film (15).

9. Use according to any one of claims 1 to 8, **characterised in that** the thin ceramic layer (12) which is applied to the backing film (11) has a layer thickness of 5 to 200 nm, preferably 20 to 150 nm and in particular 50 to 100 nm.

10. Use according to any one of claims 1 to 9, **characterised in that** the sealable, inner, exposed film (5) has a thickness of 50 to 200 µm, preferably 60 to 120 µm and in particular 70 to 100 µm.

11. Use according to any one of claims 1 to 10, **characterised in that** the laminating adhesive (4, 14, 16) is a solvent-containing, solvent-free or water-containing laminating adhesive and preferably a polyurethane adhesive system or polyester/polyurethane adhesive system, and the laminating adhesive (4, 14, 16) is applied in layer thicknesses of 2 to 15 µm, preferably 3 to 10 µm, in particular 3 to 7 µm.

12. Use according to any one of claims 1 to 11, **characterised in that** the backing film (11) consists of oriented polyamide, in particular of biaxially oriented polyamide (opA), or of polyethylene terephthalate (PET).

13. Use according to any one of claims 1 to 12, **characterised in that** the backing film (11) has a thickness of 5 to 100 µm, preferably 5 to 50 µm, in particular 10 to 20 µm.

14. Use according to any one of claims 1 to 13, **characterised in that** the thin ceramic layer (12) is made of a silica of the formula $SiO_x$, wherein x is a number from 1 to 2, or is made of an aluminium oxide of the formula $Al_yO_z$, wherein y/z represents a number from 0.2 to 1.5, or of a combination thereof.

15. Use according to any one of claims 1 to 14, **characterised in that** the thin ceramic layer (12) consists of $SiO_2$ or of $Al_2O_3$ or is a combination thereof.

16. Use according to any one of claims 1 to 15, wherein the packaging material is a bag packaging or a cover film.

17. Use according to any one of claims 1 to 16, wherein the packaging material is subjected to thermal sterilisation conditions of 120 to 140°C, preferably 130 to 135°C, for 10 to 60 minutes.

18. Method for producing a flexible packaging material for sterile products of the type to be used according to claim 1, **characterised in that** the functional layer is applied and fixed to the thin ceramic layer (12) of the backing film (11) in a printing unit by means of a printing method.

19. Method according to claim 18, **characterised in that** the functional layer containing or consisting of an inorganic-organic hybrid polymer (13) is applied in a mass per unit area of less than 1 g/m$^2$, preferably less than 0.8 g/m$^2$ and more than 0.1 g/m$^2$, preferably more than 0.5 g/m$^2$.

20. Method according to either of claims 18 or 19, **characterised in that** the functional layer containing or consisting of an inorganic-organic hybrid polymer (13) is applied to the ceramic coating by a gravure printing method.

21. Method according to any one of claims 18 to 20, **characterised in that** printing or counter-printing (18) is applied to the functional layer comprising or consisting of an inorganic-organic hybrid polymer (13) by means of a printing method, in particular by means of a gravure printing method.

22. Method according to any one of claims 18 to 21, **characterised in that** the application of the functional layer comprising or consisting of an inorganic-organic hybrid polymer (13) and the printing or counter-printing (18) are carried out in a common printing unit, and the functional layer (13) is applied and fixed at a first printing station in a print run, is preferably thermally fixed and the printing or counter-printing (18) is applied and fixed, in particular thermally fixed, at one or more subsequent printing stations in one or more print runs.

**Revendications**

1. Utilisation d'un matériau d'emballage flexible en une feuille ou une feuille composite (B) avec propriétés de barrière, pour la préparation d'emballage de produits stériles, qui sont exposés pendant le processus de stérilisation, à des conditions de stérilisation thermique, où le matériau d'emballage comprend une feuille support (11) en polyamide, polyester ou polypropylène, où sur la feuille support (11), sont disposées une couche fine céramique (12) d'une épaisseur de 5 à 200 nm et sur la couche fine céramique (12), une couche fonctionnelle (13), et où la couche fonctionnelle (13) présente une épaisseur de couche inférieure à 1 µm et consiste en un polymère hybride inorganique-organique, synthétisé selon un procédé sol-gel, et/ou le polymère hybride inorganique-organique (13) contient un réseau inorganique produit par hydrolyse contrôlée et condensation d'alcoxyde de Si modifié de manière organique et les groupes organo-fonctionnels, polymérisables, fixés sur le réseau organique sont réticulés de manière thermique, par initiation rédox ou à l'aide d'un rayonnement énergétique, par polymérisation l'un avec l'autre en un réseau organique.

2. Utilisation selon la revendication 1, **caractérisée en ce que** le réseau inorganique est modifié avec d'autres alcoxydes métalliques, de préférence avec des alcoxydes d'aluminium.

3. Utilisation selon l'une quelconque des revendications 1 à 2, **caractérisée en ce que** la couche fonctionnelle contenant ou consistant en un polymère hybride inorganique-organique, présente une épaisseur de couche de moins de 0,8 µm, et de plus de 0,1 µm, de préférence de plus de 0,5 µm.

4. Utilisation selon l'une quelconque des revendications 1 à 3, **caractérisée en ce que** la feuille composite (B) contient une feuille libre, interne, scellable (17) ou une feuille composite avec une couche libre, interne, scellable, où la feuille scellable peut être la feuille support elle-même ou une autre feuille ou couche dans la feuille composite.

5. Utilisation selon la revendication 4, **caractérisée en ce que** la feuille libre, interne, scellable (5) ou la feuille composite est disposée par une colle de laminage (4) sur la couche fonctionnelle contenant ou consistant en un polymère hybride inorganique-organique (3) de la feuille support (1).

6. Utilisation selon l'une quelconque des revendications 4 à 5, **caractérisée en ce que** la feuille libre, interne, scellable ou au moins la feuille ou couche libre, interne, scellable de la feuille composite, est un polypropylène, en particulier en polypropylène coulé.

7. Utilisation selon l'une quelconque des revendications 4 à 6, **caractérisée en ce que** la feuille composite est une feuille polyamide/polypropylène revêtue par coextrusion, coextrudée et/ou laminée par extrusion.

8. Utilisation selon l'une quelconque des revendications 1 à 7, **caractérisée en ce que** sur la couche fonctionnelle contenant ou consistant en un polymère hybride inorganique-organique (13), est disposée par une colle de laminage (14), une feuille (15) en polyamide, de préférence en polyamide orienté, et sur celle-ci, la feuille (17) libre, interne, scellable, appliquée par la colle de laminage (16) ou la feuille composite avec une couche libre, interne, scellable.

9. Utilisation selon l'une quelconque des revendications 1 à 8, **caractérisée en ce que** la couche fine céramique appliquée sur la feuille support (11) présente une épaisseur de couche de 5 à 200 nm, de préférence de 20 à 150 nm et en particulier, de 50 à 100 nm.

10. Utilisation selon l'une quelconque des revendications 1 à 9, **caractérisée en ce que** la feuille libre, interne, scellable (5) présente une épaisseur allant de 50 à 200 µm, de préférence de 60 à 120 µm et en particulier, de 70 à 100 µm.

11. Utilisation selon l'une quelconque des revendications 1 à 10, **caractérisée en ce que** la colle de laminage (4, 14, 16) est une colle de laminage contenant un solvant, exempte de solvant ou aqueuse et de préférence, un système de colle polyuréthanne ou un système de colle polyester/polyuréthanne et **en ce que** la colle de laminage (4, 14, 16) est appliquée avec des épaisseurs de couche de 2 à 15 µm, de préférence de 3 à 10 µm, en particulier de 3 à 7 µm.

12. Utilisation selon l'une quelconque des revendications 1 à 11, **caractérisée en ce que** la feuille support (11) consiste en un polyamide orienté, en particulier en un polyamide orienté de manière biaxiale (opA), ou en poly(téréphthalate d'éthylène) (PET).

13. Utilisation selon l'une quelconque des revendications 1 à 12, **caractérisée en ce que** la feuille support (11) présente une épaisseur de 5 à 100 µm, de préférence de 5 à 50 µm, en particulier de 10 à 20 µm.

14. Utilisation selon l'une quelconque des revendications 1 à 13, **caractérisée en ce que** la couche fine céramique (12) est en un oxyde de silicium de la formule $SiO_x$, où x est un nombre allant de 1 à 2, ou est en un oxyde d'aluminium de la formule $Al_yO_z$ où $y/z$ représente un nombre allant de 0,2 à 1,5, ou est une combinaison de celui-ci.

15. Utilisation selon l'une quelconque des revendications 1 à 14, **caractérisée en ce que** la couche fine céramique (12) est en un $SiO_2$ ou en un $Al_2O_3$ ou une combinaison de ceux-ci.

16. Utilisation selon l'une quelconque des revendications 1 à 15, où le matériau d'emballage est un emballage en sac ou une feuille de couverture.

17. Utilisation selon l'une quelconque des revendications 1 à 16, où le matériau d'emballage est soumis à des conditions thermiques de stérilisation de 120 à 140°C, de préférence de 130 à 135°C, pendant à 10 à 60 minutes.

18. Procédé de préparation d'un matériau d'emballage de produits stériles flexibles, du type à utiliser selon la revendication 1, **caractérisé en ce que** la couche fonctionnelle est appliquée et fixée sur la couche fine céramique (12) de la feuille support (11) dans une unité d'impression par un procédé d'impression.

19. Procédé selon la revendication 18, **caractérisé en ce que** la couche fonctionnelle contenant ou consistant en un polymère hybride inorganique-organique (13) est appliquée avec une masse spécifique surfacique inférieure à 1 $g/m^2$, de préférence inférieure à 0,8 $g/m^2$ et de plus de 0,1 $g/m^2$, de préférence plus de 0,5 $g/m^2$.

20. Procédé selon l'une quelconque des revendications 18 à 19, **caractérisé en ce que** la couche fonctionnelle contenant ou consistant en un polymère hybride inorganique-organique (13) est appliquée sur le revêtement céramique par un procédé d'héliogravure.

21. Procédé selon l'une quelconque des revendications 18 à 20, **caractérisé en ce que** sur la couche fonctionnelle contenant ou consistant en un polymère hybride inorganique-organique (13), est appliquée une impression ou une contre-impression (18) par un procédé d'impression, en particulier par un procédé d'héliogravure.

22. Procédé selon l'une quelconque des revendications 18 à 21, **caractérisé en ce que** l'application de la couche fonctionnelle contenant ou consistant en un polymère hybride inorganique-organique (13) et de l'impression ou de la contre-impression (18) sont réalisées dans une unité commune d'impression, et **en ce que** la couche fonctionnelle (13) est appliquée et fixée, de préférence fixée thermiquement, dans une première station d'impression dans un processus d'impression, et **en ce que** l'impression ou la contre-impression (18) est appliquée et fixée, en particulier fixée thermiquement, sur une ou plusieurs stations suivantes d'impression dans un ou plusieurs processus d'impression.

**Fig. 1**

**Fig. 2**

**Fig. 3**

**Fig. 4**

**Fig. 5**